# EUROPEAN PATENT SPECIFICATION

(11) **EP 2 613 637 B1**
(45) Date of publication and mention of the grant of the patent: **07.03.2018**
(21) Application number: 10782003.7
(22) Date of filing: 14.10.2010
(51) Int. Cl.: A21D 13/066, A21D 13/40, A21D 13/047, A21D 13/04, A21D 2/18, A21D 8/04, A21D 10/00

(54) **BREAD MIX COMPRISING NIXTAMALIZED CORN FLOUR**
BROTMISCHUNG MIT NIXTAMALISIERTEM MAISMEHL
MIX DE BOULANGERIE COMPRENANT DE LA FARINE DE MAÏS NIXTAMALISEE

(30) Priority: 09.09.2010 MX 2010009952
(43) Date of publication of application: 17.07.2013
(73) Proprietor: Grupo Minsa S.a.b. De C.v., 54090 Estado de México (MX)
(72) Inventor: RIVAS GRANADOS, Mireya, 54460 Estado de México (MX)
(74) Representative: Müller Schupfner & Partner Patent- und Rechtsanwaltspartnerschaft mbB
(86) International application number: PCT/IB2010/002622
(87) International publication number: WO 2012/032372

(56) References cited:
- WO-A1-2010/006778
- WO-A2-01/78534
- US-A- 4 451 491
- US-A1- 2003 165 593

## Description

### FIELD OF THE INVENTION

The present invention relates to prepared flours (pre-mixes) formulated from a nixtamalized corn flour, which are useful for preparing different bakery products, such as bread, pizza bread, pancakes, cookies, *churros,* hot cakes, etc.

### BACKGROUND OF THE INVENTION

Nowadays, consumers are increasingly concerned about the nutrimental value of the food they eat. Diseases like diabetes, hypertension, gastric disorders, etc., are directly related to the kind of products people eat. For this reason, demands for healthy food, such as low-calorie food or high-fiber content food are on the rise.

Bakery products are among food products containing fiber that may be of great help in treating and preventing certain gastric disorders. However, since traditionally these kinds of products are prepared from wheat flours, which are poor in fiber content, it has become necessary to find alternatives to this cereal. Moreover, the existence of a great number of people allergic to wheat gluten must be taken into consideration, making it very important to turn to the use of a different kind of flour.

According to the above, in order to overcome the disadvantages of using wheat flour, the use of flours derived from other cereals has been proposed. However, the elaboration of products made from flours other than those containing gluten is not an easy task.

It is well-known that, in the field of the present invention, gluten is a protein comprised of gliadin and glutenin whose role is to create a net that captures carbon dioxide gas generated from the sugar fermentation in the baking dough. As a consequence, dough increases its volume (dough rises) taking the characteristic appearance for this kind of products. The use of flour derived from a cereal lacking gluten prevents dough from rising, and therefore the intended products cannot be obtained.

In order to overcome the above-mentioned problems different compositions that do not contain gluten, and are useful in bread-making products, have been proposed.

A proposal disclosure within the field of the invention comprises the use of a combination of ether cellulose in water and isagol (or psyllium) for bread preparation (Carbohydr. Poly., 25, 337-344 (1994)). Another proposal is the use of water-soluble polysaccharides, such as guar gum and xanthan gum (Cereal Chemistry, 53 (5), 626-635 (1976)). The disadvantage of said products prepared from said material is that, although they have an acceptable volume, a hard crust is formed providing an inadequate texture.

On the other hand, US Patent No. 5,492,712 discloses a composition comprising gluten-free flour as a thickener, guar gum or xanthan gum. The disadvantage of said composition is that, during baking, it cracks due to a decrease in the viscoelasticity of said thickener.

Another alternative suggested in the preparation of bakery products is the use of corn flour.

For example, Mexican Patent No. 206,738 protects a bakery product based on nixtamalized corn hull. The disadvantage of the products protected by this patent is that only corn hull is used, and all other nutrimental elements are left aside.

Further, the US patent application No. US 2007/148318 describes and claims a continuous method comprising a precooking step for obtaining a whole corn flour useful in bakery products. In this case, the flour obtained by this method does not contain all the nutrients found in a corn flour prepared by other traditional methods.

US 4451491 A teaches a mix of gluten-free flour comprising 50-80 wt% of a non-wheat-based starch, 0.5 to 5 wt % of a gluten-substitute gum and 8 to 20% of an powdered whipping agent. This mix is combined with water to form cohesive dough, which is baked.

US 2003/165593 A1 discloses a tortilla dough comprising amongst others amylase and corn flour added to masa nixtamal.

WO 01/78534 A2 describes a composition for reducing hypercholesterolemia and controlling postprandial blood glucose and insulin levels, comprising beta-glucan soluble fiber and non-digestible fats. In example 7 yellow masa is used.

WO 2010/006778 A1 teaches gluten-free or gluten-reduced bakery products, comprising enzyme active soy flour, hydrocolloid, and further optionally one or more other gluten-free starches or flours, such as corn starch. Further additives such as leavening agents, sugar, salt, oxidizing and reducing agents, enzymes such as alpha-amylase hemicellulase, microbial inhibitors, binding agents, glycerol, oils, water, milk, eggs, flavoring agents, cacao powder and the like are also disclosed.

For the above reasons, the present application resolves the problem of product preparation of gluten-free bakery products with high fiber content by using a composition comprising a nixtamalized corn flour.

Nixtamalization (a term deriving from the nahuatl words nextli, or soda ash, and tamalli meaning cooked corn dough) is a method to obtain corn flour, and is well-known in the art. (Bello-Perez, Luis A, et al. "Propiedades quimicas, fisicoquimicas y reologicas de masas y harinas de maiz nixtamalizado", Agrociencia 36:319-328 (2002)). Generally, nixtamalization comprises the steps of:
a) Cooking corn in water containing lime (calcium hydroxide);
b) Allowing grains to rest for a predetermined time period and swell in order to allow the hull to separate from the grain;
c) Rinsing in order to remove excess lime; and
d) Grinding the obtained grains.

The nixtamalization process improves the nutrimental quality of corn by increasing the availability of calcium; it also increases protein quality by rendering the proteins more digestible, and allows for niacin assimilation, which is found in the grain, preventing diseases like pellagra.

A corn flour is capable of overcoming most of the problems associated with the use of wheat flour.

### BRIEF DESCRIPTION OF THE INVENTION

The present invention provides a prepared flour (premix) useful in
the preparation of gluten-free bakery products having high protein content, which comprise nixtamalized corn flour and suitable food additives.

The present invention provides a prepared flour (premix) comprising a nixtamalized corn flour and suitable food additives, and having improved nutrimental values with respect to dietary fiber and calcium.

### DETAILED DESCRIPTION OF THE INVENTION

The inventors of the present invention found that it is possible to obtain a prepared flour (premix) for making bakery products from nixtamalized corn flour, which is, advantageously, free of gluten, has good water absorption properties, and is capable of fat encapsulation.

In order to obtain the final structure of bakery products, the prepared flour was added with hydrocolloids and an enzymatic complex. The enzymes used are selected from the group comprising β-amylase, lipase, pentosanases, and mixtures thereof.

According to the above, the flour of the present application for making a bakery product comprises: a) 60 to 95 % by weight of nixtamalized corn flour; b) 2.5 to 12 % by weight of powder fat, c) 0.001 to 0.1 % by weight of enzymatic complex, wherein the enzymes from said enzymatic complex are selected from the group comprising β-amylase, lipase, pentosanases and mixtures thereof; and d) 0.5 to 1.5 % by weight of hydrocolloids.

In an additional embodiment of the invention, the nixtamalized corn flour is present in an amount from 70 to 90 % by weight.

In a further embodiment of the invention, the powder fat is present in an amount from 5 to 10 % by weight.

In another embodiment of the invention, the hydrocolloid is preferably present in an amount from 0.5 to 1.0 % by weight. Particularly, it is preferred that said hydrocolloid is xanthan gum.

Besides the aforementioned ingredients, the prepared flour of the present invention can comprise sweeteners, oils, emulsifiers, baking soda, additional proteins, starches, preservatives, anti-caking agents, salts and mixtures thereof.

A sweetener is present in an amount from 10 to 35 % by weight, more preferable in an amount from 15 to 30%. In an embodiment of the invention, said sweetener is sugar.

Oils useful in the present invention are those used in bakery products, such as soy oil, sunflower oil, etc. These ingredients can be present in an amount from 10 to 35 % by weight, preferably in an amount from 16 to 30 % by weight. The preferred oil for carrying out the invention is soy oil.

Emulsifiers can be monoglycerides or diglycerides. The quantity of this ingredient in the flour of the invention is from 0.05 to 2 % by weight, and more preferably in an amount from 0.05 to 1.5 % by weight. Particularly, monoglycerides are preferred as emulsifiers.

The baking soda can be present in the flour according to the present invention in an amount of from 0.1 to 2 % by weight, preferably in an amount from 0.2 to 1.5%.

Proteins from different sources can be added to the flour of the present invention. The additional protein can be present in an amount from 1.0 to 20 % by weight, preferably in an amount from 2.0 to 15 % by weight. In an embodiment of the invention, said additional protein can be milk protein.

On the other hand, the flour of the present invention can be added with starch from sources other than native starch as well. In one embodiment, added starch can be modified corn or tapioca starch. Said ingredient can be present in an amount from 2 to 15 % by weight.

Preservatives suitable for use in the flour of the present invention can be selected from the group comprising potassium sorbate, calcium propionate, or a mixture thereof. The quantity of said ingredient can be from 0.05 to 1.0 % by weight of the flour.

The preferred anti-caking agent useful in the present application is calcium monophosphate, which is added in an amount of from 0.5 to 2 % by weight, and more preferably in an amount from 1 to 2%.

The particularly preferred salt useful in the prepared flour of the present invention is sodium chloride. The quantity of this ingredient is from 0.5 to 2 % by weight, particularly in an amount from 1.0 to 1.5 % by weight.

The method for producing the flour of the present invention comprises admixing nixtamalized corn flour in an amount from 60 to 95 % by weight, powder fat in an amount from 2.5 to 12 % by weight, the enzymatic complex in an amount from 0.001 to 0.1 % by weight, wherein the enzymes from said enzymatic complex are selected from the group comprising β-amylase, lipase, pentosanases and mixtures thereof, and hydrocolloids in an amount from 0.5 to 1.5 % by weight, in a mechanical fluid bed mixer with disaggregating agents. This kind of mixer is equipment that operates under the principle of "mechanical fluidization", which is an intense internal motion of particles achieving highly efficient mixing of components of diverse densities, liquid-in-powder dispersions, encapsulates, granules, forming a single phase.

It is considered that, without further description, one skilled in the art can elaborate and make use of the prepared baking flours of the present invention by using the foregoing description as well as the following illustrative examples. Therefore, the following examples show the preferred embodiments and methods for using and practicing the present invention, and in no way said examples should be regarded as limitative of the overall specification.

### EXAMPLES

### Example 1

Pizza base made from prepared flour based on nixtamalized corn flour.

A pizza base was made from the prepared flour of the present invention according to the following formulation:

**Table 1**

| **Component** | **%** |
|---|---|
| **Prepared flour (premix)** | **52.1** |
| **Water** | **47.9** |
| **Total** | **100** |

The method for preparing 1 Kg of pizza base paste was as follows:
a) 521 g of the prepared flour of the present invention were weighed b) 479 g of cold water were weighed
c) a and b were mixed in a Kitchen Aid mixer, at medium speed for about 2 minutes
d) The paste was spread on a working table with a rolling pin and four 250 g pizza bases were prepared.
e) These were baked, without any tomato paste at 200°C for 15 minutes.

### Comparative Example 1

### Pizza base made from prepared flour based on flour of the wheat type

A pizza base was prepared according to the formula and method described in example 1. The prepared flour contained a flour of the wheat type.

After its preparation, products from example 1 and comparative example 1 were evaluated, and the following results were found:
- The pizza base made from a nixtamalized corn flour is more compact than the pizza base elaborated from wheat flour;
- The volume of the pizza base made from a nixtamalized corn flour is smaller than the pizza base prepared from wheat;
- The taste of the pizza base elaborated from the nixtamalized corn flour is a different taste (which is welcomed by consumers) compared to that of a pizza base prepared from wheat flour.

Also, a comparison between products from example 1 and comparative example 1 was made, accordingly it was demonstrated that a product prepared from a nixtamalized corn flour has superior properties than a product elaborated from wheat. The following Table 2 shows this aspect of the invention.

**Table 2**

| Nutrient | Pizza Base elaborated from nixtamalized corn flour | Pizza Base elaborated from flour of the wheat type |
|---|---|---|
| Proteins | 8.13% | 11.47% |
| Carbohydrates | 66.98% | 67.4% |
| Fat | 12.48% | 16.35% |
| Total Dietary Fiber | 5.83% | 1.38% |
| Calcium mg/100 g | 56 | 15 |
| Energetic content Kcal/100 g | 412.16 | 562.63 |

As can be seen, a pizza base prepared with a nixtamalized corn flour has a lower carbohydrate and fat content, resulting in a less energetic content. Similarly, the amount of dietary fiber and calcium present in a product made from nixtamalized corn flour is much higher than the amount present in a product made from wheat.

### Example 2

### Cookies preparation from flour prepared from a nixtamalized corn flour base

Cookies were prepared by using traditional formulae and methods for preparing said product. Flour prepared according to the present application

### Comparative Example 2

### Preparation of cookies from prepared flour based on flour of the wheat type

Cookies were prepared by using traditional formulae and methods for preparing said product. A flour of the wheat type was used as the product base.

Accordingly, a nutrimental comparison between cookies of the example 2 and the comparative example 2 was made, and the following results were obtained:

**Table 3**

| Nutrient | Cookie prepared from nixtamalized corn flour | Cookie prepared from flour of the wheat type |
|---|---|---|
| Proteins | 6.84% | 9.18% |
| Total Dietary Fiber | 4.64% | 1.13% |
| Calcium mg/100 g | 1340.1 mg/kg | 846.76 mg/kg |

Results in the above Table 3 show that the amount of dietary fiber and calcium in a cookie prepared with nixtamalized corn flour is much higher than the amount present in a wheat cookie.

## Claims

1. A prepared flour for making a bakery product, comprising:
a) 60 to 95 % by weight of nixtamalized corn flour;
b) 2.5 to 12 % by weight of powder fat;
c) 0.001 to 0.1 % by weight of enzymatic complex, wherein the enzymes from said enzymatic complex are selected from the group comprising β-amylase, lipase, pentosanases and mixtures thereof; and
d) 0.5 to 1.5 % by weight of hydrocolloids.

2. The prepared flour for bread making according to claim 1, wherein said nixtamalized corn flour is present in an amount from 70 to 90 % by weight.

3. The prepared flour for bread making according to claim 1, wherein said powder fat is present in an amount from 5 to 10 % by weight.

4. The prepared flour for bread making according to claim 1, wherein said hydrocolloid is present in an amount from 0.5 to 1.0 % by weight and wherein said hydrocolloid is preferably xanthan gum.

5. The prepared flour for bread making according to claim 1, further comprising sweeteners, oils, emulsifiers, baking soda, additional proteins, starches, preservatives, anti-caking agents, salts and mixes thereof.

6. The prepared flour for bread making according to claim 5, wherein said sweetener is present in an amount from 10 to 35 % by weight, preferably in an amount from 15 to 30 % by weight and most preferably is sugar in an amount of from 15 to 30 % by weight.

7. The prepared flour for bread making according to claim 5, wherein said oil is present in an amount from 10 to 35 % by weight, preferably in an amount from 16 to 30 % by weight.

8. The prepared flour for bread making according to claim 5, wherein said oil is selected from the group comprising soy oil and sunflower oil and wherein said oil is preferably soy oil.

9. The prepared flour for bread making according to claim 5, wherein said emulsifier is present in an amount from 0.05 to 2 % by weight, preferably in an amount from 0.05 to 1.5 % by weight.

10. The prepared flour for bread making according to claim 5, wherein said emulsifier is selected from monoglycerides or diglycerides and preferably is a monoglyceride.

11. The prepared flour for bread making according to claim 5, wherein said baking soda is present in an amount from 0.1 to 2 % by weight, preferably in an amount from 0.2 to 1.5 % by weight.

12. The prepared flour for bread making according to claim 5, wherein said additional protein is present in an amount from 1.0 to 20 % by weight, preferably in an amount from 2.0 to 15 % by weight and/or wherein said additional protein is milk protein.

13. The prepared flour for bread making according to claim 5, wherein said starch is selected from the group comprising modified corn or tapioca starch and/or wherein said starch is present in an amount from 2 to 15 % by weight.

14. The prepared flour for bread making according to claim 5, wherein said preservative is selected from the group comprising potassium sorbate, calcium propionate, or a mixture thereof and wherein said preservative is preferably present in an amount from 0.05 to 1.0 % by weight.

15. The prepared flour for bread making according to claim 5, wherein said anti-caking agent is calcium monophosphate and wherein said anti-caking agent is preferably present in an amount from 0.05 to 2 % by weight and most preferably in an amount from 1 to 2 % by weight.

16. The prepared flour for bread making according to claim 5, wherein said salt is sodium chloride and present in an amount from 0.5 to 2.0 % by weight and preferably in an amount from 1.0 to 1.5 % by weight.

17. A method for producing a prepared flour for making a bakery product, comprising admixing
nixtamalized corn flour in an amount from 60 to 95 % by weight,
powder fat in an amount from 2.5 to 12 % by weight,
an enzymatic complex in an amount from 0.001 to 0.1 % by weight, wherein the enzymes from said enzymatic complex are selected from the group comprising β-amylase, lipase, pentosanases and mixtures thereof, and
hydrocolloids in an amount from 0.5 to 1.5 % by weight,
in a fluid bed mixer.

## Patentansprüche

1. Ein präpariertes Mehl zur Herstellung einer Backware, umfassend:
a) 60 bis 95 Gew.-% nixtamalisiertes Maismehl;
b) 2,5 bis 12 Gew.-% Fettpulver;
c) 0,001 bis 0,1 Gew.-% enzymatischer Komplex, wobei die Enzyme besagten enzymatischen Komplexes aus der Gruppe ausgewählt sind, umfassend β-Amylase, Lipase, Pentosanasen und Gemische davon; und
d) 0,5 bis 1,5 Gew.-% Hydrokolloide.

2. Das präparierte Mehl zur Brotherstellung gemäß Anspruch 1, wobei besagtes nixtamalisiertes Maismehl in einer Menge von 70 bis 90 Gew.-% vorliegt.

3. Das präparierte Mehl zur Brotherstellung gemäß Anspruch 1, wobei besagtes Fettpulver in einer Menge von 5 bis 10 Gew.-% vorliegt.

4. Das präparierte Mehl zur Brotherstellung gemäß Anspruch 1, wobei besagtes Hydrokolloid in einer Menge von 0,5 bis 1,0 Gew.-% vorliegt und wobei besagtes Hydrokolloid bevorzugt Xanthangummi ist.

5. Das präparierte Mehl zur Brotherstellung gemäß Anspruch 1, außerdem umfassend Süßstoffe, Öle, Emulgatoren, Backpulver, zusätzliche Proteine, Stärken, Konservierungsmittel, Antiklumpmittel, Salze und Gemische davon.

6. Das präparierte Mehl zur Brotherstellung gemäß Anspruch 5, wobei besagter Süßstoff in einer Menge von 10 bis 35 Gew.-%, bevorzugt in einer Menge von 15 bis 30 Gew.-% vorliegt und am bevorzugtesten Zucker in einer Menge von 15 bis 30 Gew.-% ist.

7. Das präparierte Mehl zur Brotherstellung gemäß Anspruch 5, wobei besagtes Öl in einer Menge von 10 bis 35 Gew.-%, bevorzugt in einer Menge von 16 bis 30 Gew.-% vorliegt.

8. Das präparierte Mehl zur Brotherstellung gemäß Anspruch 5, wobei besagtes Öl aus der Gruppe ausgewählt ist, bestehend aus Sojaöl und Sonnenblumenöl und wobei besagtes Öl bevorzugt Sojaöl ist.

9. Das präparierte Mehl zur Brotherstellung gemäß Anspruch 5, wobei besagter Emulgator in einer Menge von 0,05 bis 2 Gew.-%, bevorzugt in einer Menge von 0,05 bis 1,5 Gew.-% vorliegt.

10. Das präparierte Mehl zur Brotherstellung gemäß Anspruch 5, wobei besagter Emulgator aus Monoglyceriden oder Diglyceriden ausgewählt ist und bevorzugt ein Monoglycerid ist.

11. Das präparierte Mehl zur Brotherstellung gemäß Anspruch 5, wobei besagtes Backpulver in einer Menge von 0,1 bis 2 Gew.-%, bevorzugt in einer Menge von 0,2 bis 1,5 Gew.-% vorliegt.

12. Das präparierte Mehl zur Brotherstellung gemäß Anspruch 5, wobei besagtes zusätzliches Protein in einer Menge von 1,0 bis 20 Gew.-%, bevorzugt in einer Menge von 2,0 bis 15 Gew.-% vorliegt und/oder wobei besagtes zusätzliches Protein Milchprotein ist.

13. Das präparierte Mehl zur Brotherstellung gemäß Anspruch 5, wobei besagte Stärke aus der Gruppe ausgewählt ist, umfassend modifizierte Mais- oder Tapiokastärke und/oder wobei besagte Stärke in einer Menge von 2 bis 15 Gew.-% vorliegt.

14. Das präparierte Mehl zur Brotherstellung gemäß Anspruch 5, wobei besagtes Konservierungsmittel aus der Gruppe ausgewählt ist, umfassend Kaliumsorbat, Calciumpropionat oder ein Gemisch davon und wobei besagtes Konservierungsmittel bevorzugt in einer Menge von 0,05 bis 1,0 Gew.-% vorliegt.

15. Das präparierte Mehl zur Brotherstellung gemäß Anspruch 5, wobei besagtes Antiklumpmittel Calciummonophosphat ist und wobei besagtes Antiklumpmittel in einer Menge von 0,05 bis 2 Gew.-% und am bevorzugtesten in einer Menge von 1 bis 2 Gew.-% vorliegt.

16. Das präparierte Mehl zur Brotherstellung gemäß Anspruch 5, wobei besagtes Salz Natriumchlorid ist und in einer Menge von 0,5 bis 2,0 Gew.-% und bevorzugt in einer Menge von 1,0 bis 1,5 Gew.-% vorliegt.

17. Ein Verfahren zur Herstellung eines präparierten Mehls zur Herstellung einer Backware, umfassend Mischen von
nixtamalisiertem Maismehl in einer Menge von 60 bis 95 Gew.-%,
Fettpulver in einer Menge von 2,5 bis 12 Gew.-%,
einem enzymatischen Komplex in einer Menge von 0,001 bis 0,1 Gew.-%, wobei die Enzyme besagten enzymatischen Komplexes aus der Gruppe ausgewählt sind, umfassend β-Amylase, Lipase, Pentosanasen und Gemische davon, und
Hydrokolloiden in einer Menge von 0,5 bis 1,5 Gew.-%,
in einem Wirbelschichtmischer.

## Revendications

1. Farine préparée pour la fabrication d'un produit de boulangerie, comprenant :
a) 60 à 95 % en poids de farine de maïs nixtamalisée ;
b) 2,5 à 12 % en poids de matières grasses en poudre ;
c) 0,001 à 0,1 % en poids de complexe enzymatique, les enzymes dudit complexe enzymatique étant choisies dans le groupe comprenant la β-amylase, la lipase, les pentosanases et les mélanges de celles-ci ; et
d) 0,5 à 1,5 % en poids d'hydrocolloïdes.

2. Farine préparée pour la fabrication de pain, selon la revendication 1, dans laquelle ladite farine de maïs nixtamalisée est présente dans une quantité de 70 à 90 % en poids.

3. Farine préparée pour la fabrication de pain, selon la revendication 1, dans laquelle lesdites matières grasses en poudre sont présentes dans une quantité de 5 à 10 % en poids.

4. Farine préparée pour la fabrication de pain, selon la revendication 1, dans laquelle ledit hydrocolloïde est présent dans une quantité de 0,5 à 1,0 % en poids et dans laquelle ledit hydrocolloïde est, de préférence, de la gomme de xanthane.

5. Farine préparée pour la fabrication de pain, selon la revendication 1, comprenant en outre des édulcorants, des huiles, des émulsifiants, du bicarbonate de soude, des protéines supplémentaires, des amidons, des conservateurs, des agents anti-agglutination, des sels et des mélanges de ceux-ci.

6. Farine préparée pour la fabrication de pain, selon la revendication 5, dans laquelle ledit édulcorant est présent dans une quantité de 10 à 35 % en poids, de préférence dans une quantité de 15 à 30 % en poids et, de la manière que l'on préfère le plus, est du sucre dans une quantité de 15 à 30 % en poids.

7. Farine préparée pour la fabrication de pain, selon la revendication 5, dans laquelle ladite huile est présente dans une quantité de 10 à 35 % en poids, de préférence dans une quantité de 16 à 30 % en poids.

8. Farine préparée pour la fabrication de pain, selon la revendication 5, dans laquelle ladite huile est choisie dans le groupe comprenant l'huile de soja et l'huile de tournesol et dans laquelle ladite huile est, de préférence, l'huile de soja.

9. Farine préparée pour la fabrication de pain, selon la revendication 5, dans laquelle ledit émulsifiant est présent dans une quantité de 0,05 à 2 % en poids, de préférence dans une quantité de 0,05 à 1,5 % en poids.

10. Farine préparée pour la fabrication de pain, selon la revendication 5, dans laquelle ledit émulsifiant est choisi parmi les monoglycérides ou les diglycérides et, de préférence, est un monoglycéride.

11. Farine préparée pour la fabrication de pain, selon la revendication 5, dans laquelle ledit bicarbonate de soude est présent dans une quantité de 0,1 à 2 % en poids, de préférence dans une quantité de 0,2 à 1,5 % en poids.

12. Farine préparée pour la fabrication de pain, selon la revendication 5, dans laquelle ladite protéine supplémentaire est présente dans une quantité de 1,0 à 20 % en poids, de préférence dans une quantité de 2,0 à 15 % en poids et/ou dans laquelle ladite protéine supplémentaire est de la protéine de lait.

13. Farine préparée pour la fabrication de pain, selon la revendication 5, dans laquelle ledit amidon est choisi dans le groupe comprenant de l'amidon de maïs ou de tapioca modifié et/ou dans laquelle ledit amidon est présent dans une quantité de 2 à 15 % en poids.

14. Farine préparée pour la fabrication de pain, selon la revendication 5, dans laquelle ledit conservateur est choisi dans le groupe comprenant le sorbate de potassium, le propionate de calcium ou un mélange de ceux-ci et dans laquelle ledit agent conservateur est, de préférence, présent dans une quantité de 0,05 à 1,0 % en poids.

15. Farine préparée pour la fabrication de pain, selon la revendication 5, dans laquelle ledit agent anti-agglutination est le monophosphate de calcium et dans laquelle ledit agent anti-agglutination est, de préférence, présent dans une quantité de 0,05 à 2 % en poids et, de la manière que l'on préfère le plus, dans une quantité de 1 à 2 % en poids.

16. Farine préparée pour la fabrication de pain, selon la revendication 5, dans laquelle ledit sel est le chlorure de sodium et est présent dans une quantité de 0,5 à 2,0 % en poids et, de préférence, dans une quantité de 1,0 à 1,5 % en poids.

17. Procédé de fabrication d'une farine préparée pour la fabrication d'un produit de boulangerie
consistant à mélanger
de la farine de maïs nixtamalisée dans une quantité de 60 à 95 % en poids,
des matières grasses en poudre dans une quantité de 2,5 à 12 % en poids,
un complexe enzymatique dans une quantité de 0,001 à 0,1 % en poids, les enzymes dudit complexe enzymatique étant choisies dans le groupe comprenant la β-amylase, la lipase, les pentosanases et les mélanges de celles-ci ; et
des hydrocolloïdes dans une quantité de 0,5 à 1,5 % en poids,
dans un mélangeur à lit fluidisé.
